# EUROPEAN PATENT SPECIFICATION

(11) **EP 2 749 462 B1**
(45) Date of publication and mention of the grant of the patent: **31.10.2018**
(21) Application number: 13199319.8
(22) Date of filing: 23.12.2013
(51) Int. Cl.: B60T 7/04, B60T 8/44, B60T 11/16, B60T 13/14

(54) **Hydraulic braking system and method of brake boosting in a motor vehicle**
Hydraulisches Bremssystem und Verfahren der Bremsverstärkung in einem Kraftfahrzeug
Système de freinage hydraulique et procédé de suralimentation de freinage dans un véhicule automobile

(30) Priority: 28.12.2012 IT TO20121164
(43) Date of publication of application: 02.07.2014
(73) Proprietor: VHIT S.p.A., 26010 Offanengo (CR) (IT)
(72) Inventor: Cadeddu, Leonardo, 26010 Offanengo (CR) (IT)

(56) References cited:
- DE-A1-102010 042 694
- DE-A1-102012 205 115
- DE-A1-102012 205 117
- US-A1- 2002 017 820
- US-A1- 2002 040 580
- US-A1- 2002 152 883
- US-A1- 2003 214 177
- US-A1- 2012 074 769

## Description

### Technical field

The present invention relates to the braking systems of motor vehicles, and more particularly it concerns a hydraulic braking system comprising a hydraulic master cylinder (brake pump) and a servomotor for hydraulic brake boosting (power brake or brake booster).

Preferably, the invention is employed in self-propelled vehicles such as operating machines, farm machines, earth-moving machines and the like, and the following description will generally refer to this preferred application.

### Prior Art

In many self-propelled vehicles used both in fields or yards and on roads, it is usual practice associating a brake booster with the master cylinder in order to reduce the force applied on the brake pedal(s) with respect to the use of the only master cylinder.

In braking systems comprising a master cylinder and a brake booster, it is desirable to provide the driver with a fine control of the braking force, in such a way that the reaction to the actuation of the brake pedal does not give rise to unpleasant sensations for the driver.

A system attaining this goal is disclosed in EP 1457400. In such a prior art system, the braking force boosted by the brake booster is transferred to the master cylinder by making the liquid under pressure present in the brake booster pass into the master cylinder. The transfer takes place through a valve system provided in an operating piston of the brake booster, actuated by the brake pedal. The pressure of the liquid thus generated in the master cylinder in turn generates a hydraulic reaction force on the operating piston of the brake booster.

This system is made rather complex by the provision of the valve system. Moreover, since the valves are arranged along the axis of the operating piston, the axial size is relatively great. Furthermore, since the brake booster and the master cylinder communicate with each other, the prior art system can be used only in braking systems where both devices operate with a same hydraulic fluid, and not in systems where they operate with different and mutually incompatible fluids (usually, mineral oil for the brake booster and non-mineral brake liquid for the master cylinder). This is a considerable limitation, since systems operating with two fluids are quite common.

Document DE 10 2012 205115_A1 discloses, inter alia, a fluid pressure booster which includes an auxiliary fluid pressure source having a pump and a pressure accumulator, a pressure adjusting device which adjusts fluid pressure supplied from the auxiliary fluid pressure source to a value corresponding to an operating amount of a brake operating member.
The known booster and the brake system operate with only one hydraulic fluid.

Document US 2002/152883_A1 discloses a fluid pressure boosting device wherein, inside a rear end portion of a primary piston of a master cylinder, a reaction disk made of an elastic material is fitted.
The reaction disk is mainly used for attaining a jumping characteristic, thereby simplifying the structure for attaining the jumping characteristic.
The known boosting device operates with only one hydraulic fluid.

Document US2012/074769_A1 discloses a hydraulic brake apparatus for a vehicle which includes, inter alia, a driving pressure reducing valve.
The known apparatus further comprises a tandem cylinder including two pistons. A rubber reaction disc is compressed by a reaction force directly transmitted via one of the two pistons.
The known hydraulic brake apparatus operates with only one hydraulic fluid.

Document US2002/017820_A1 discloses a hydraulic brake apparatus for a vehicle wherein, inter alia, a depressing force applied to a brake pedal is outputted from a master cylinder and supplied to wheel cylinders operatively associated with respective wheels of the vehicle.
The prior art document further discloses a metal plate that is firmly in contact with a reaction force disc and that is axially movable together with the reaction disc.
In operation a brake hydraulic pressure is transmitted to the brake pedal via the metal plate and the reaction force disc.
The known hydraulic brake apparatus operates with only one hydraulic fluid.

US2013/199364_A1 discloses a coupling apparatus for connecting a brake input element to a main brake cylinder wherein the brake input element is spaced apart from the main brake cylinder.
According to such a prior art the coupling apparatus has a hydraulic housing having at least one internal chamber of water tight configuration. The internal chamber is preferably filled at least in part with a fluid, preferably with the hydraulic fluid (brake fluid) of the at least one brake circuit hydraulically connected to the brake master cylinder.
The known coupling apparatus operates with only one hydraulic fluid.

GB 946715 and US 2993478 disclose systems comprising a master cylinder and a brake booster, in which the braking force boosted in the brake booster and the reaction force of the master cylinder are transmitted to the master cylinder and the brake booster, respectively, through a disc of elastomeric material which becomes deformed due to such forces. In such systems, the master cylinder is a hydraulic cylinder and the brake booster is a pneumatic booster and is vacuum operated.

Taking into account that the structure of a vacuum-operated pneumatic brake booster is intrinsically different from the structure of a hydraulic brake booster using pressurised fluid, hitherto there has been a technical prejudice against the possibility of using the elastomeric disc disclosed in GB 946715 and US 2993478 in a hydraulic brake booster, and, actually, no wholly hydraulic braking system adopting such a solution is known.

Studies and tests performed by the Applicant have on the contrary revealed that such application is possible and gives considerable technical advantages over a solution with wholly hydraulic management of the transmission of the braking force from the brake booster to the master cylinder and of the reaction force from the master cylinder to the brake booster.

### Description of the invention

Thus, according to the invention, a braking system is provided, comprising a hydraulic master cylinder and a hydraulic brake booster, wherein the means for transferring the braking force to a piston of the master cylinder and for transferring the reaction force to a piston assembly of the brake booster comprise an elastomeric disc, which is arranged between the piston assembly and a pushing member for the piston of the master cylinder and is arranged to be deformed by the piston assembly for transferring the braking force to the piston of the master cylinder or by the pushing member for transferring the reaction force to the piston assembly, respectively.

According to an advantageous feature of the invention, in case the master cylinder and the brake booster operate with a first and a second mutually incompatible hydraulic fluid, respectively, a partition is arranged between the exhaust chamber and an end of a body of the master cylinder, said partition being sealingly mounted in the body of the brake booster and being arranged to define, with the end of the body of the master cylinder, a separation chamber arranged to mutually isolate spaces in which the first and the second fluid, respectively, are present.

Replacing a system of valves serially arranged along the axis of the operating piston by the elastomeric disc considerably simplifies the structure of the braking system and also allows limiting the axial size thereof. Moreover, since no transfer of hydraulic fluid from the brake booster to the master cylinder is required, the invention is readily utilisable in systems where the brake booster and the master cylinder operate with incompatible fluids.

The invention also concerns a method of brake boosting for a braking system comprising a hydraulic master cylinder and a hydraulic brake booster, wherein the transfer of the braking force, possibly boosted in the brake booster, from the brake booster to a piston of the master cylinder and the transfer of the reaction force generated in the master cylinder in response to the braking force from the master cylinder to the brake booster are performed by means of the deformation of an elastomeric disc.

### Brief description of the figures

The above and other features and advantages of the invention will become apparent from the following description of preferred embodiments, made by way of non limiting example with reference to the accompanying drawings, in which:
- Fig. 1 is a cross-sectional view of a braking system according to the invention, shown in rest conditions;
- Fig. 2 is an enlarged cross-sectional view of the brake booster of the system shown in Fig. 1; and
- Fig. 3 is a graph showing the characteristic output force of the brake booster - force applied by the brake pedal in the system shown in Figs. 1 and 2.

### Description of preferred embodiments

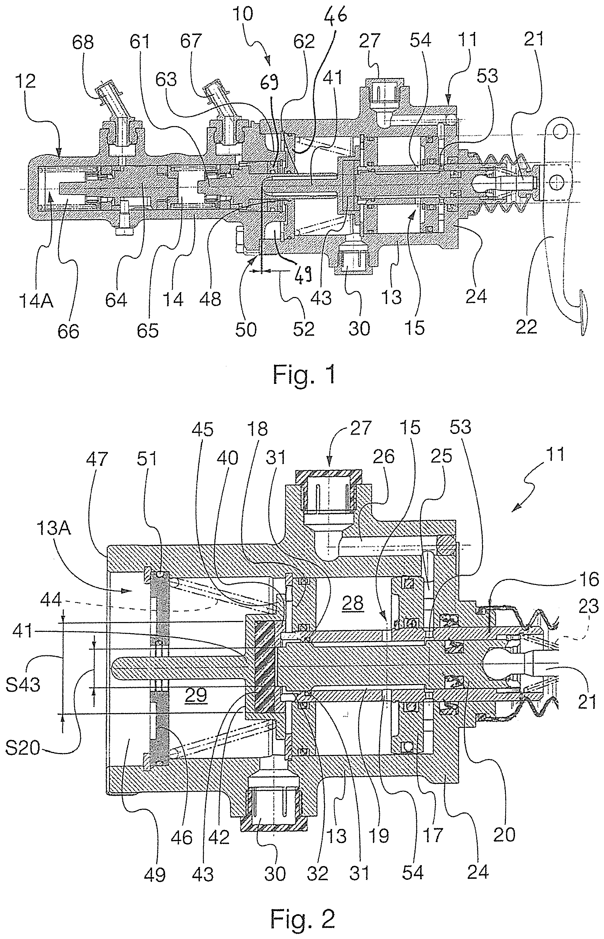

Referring to Figs. 1 and 2, a hydraulic braking system 10 according to a preferred embodiment of the invention comprises an assembly consisting of a hydraulic brake boosting system (brake booster) 11 and a hydraulic master cylinder (or brake pump) 12. Braking system 10 is actuated by brake pedal 22 through a suitable actuation rod 21. For the sake of clarity of the description, hereinafter the brake pedal side will be referred to as the rear side of the assembly, and the opposite side will be referred to as the front side. The components of both parts 11, 12 of system 10 are housed in substantially cylindrical cavities 13A, 14A of respective coaxial hollow bodies 13, 14. A rear end 63 of body 14 of master cylinder 12 is received in a front portion of cavity 13A.

In the preferred embodiment shown in these Figures, it is assumed that brake booster 11 and master cylinder 12 operate with two incompatible fluids. For instance, brake booster 11 operates with mineral oil, whereas master cylinder 12 operates with a non-mineral brake liquid (usually a glycol-based or a silicone-based liquid). Such a solution is common in many machines of the kind in which the invention is preferably applied, where the brakes require actuation with non-mineral liquid, whereas the brake booster and other units, including the various operating devices mounted on the machine, use mineral oil for their operation.

Brake booster 11 is partly made like the brake booster disclosed in EP 1457400. This known portion, of which a general outline will be described here in order to make understanding of the invention easier, includes a hydraulic boost piston 15, coaxial with body 13 and axially slidable therein. Boost piston 15 includes a plunger 16, which has a rear portion with larger outside diameter and a front portion with smaller outside diameter and which will be referred to hereinafter as "dual-diameter plunger". A disc or piston 17 is rigidly connected for translation to the plunger and has an outer edge sealingly engaging the surface of cavity 13A of body 13. Thanks to the provision of the two portions with different diameters, plunger 16, in case of boosting, also acts as a return spring for boost piston 15. A stationary front closing partition 18, also sealingly mounted in cavity 13A, guides the front end of plunger 16 while the latter is sliding, and acts as a stop for the stroke of piston 17. Internal cavity 19 of plunger 16 houses a hydraulic operating piston 20 (known in the art as "spool") slidable relative to the same plunger. Spool 20 is connected, at its rear end, to actuating rod 21, which is arranged to make spool 20 slide when the force applied to brake pedal 22 overcomes the preload of a spring 23.

The whole of boost piston 15 and spool 20 will be also referred to as "piston assembly".

A rear chamber 25 is formed between piston 17 and a rear end 24 of body 13 and it communicates, through a duct 26 formed in the rear portion of body 13, with an inlet 27 for the pressurised fluid coming from a hydraulic circuit (not shown). A front chamber 28 is defined between closing partition 18 and piston 17. As it will be better explained in the description of the operation, depending on the operating conditions of the system, and hence on the position of spool 20 relative to dual-diameter plunger 16, chamber 28 may be put in communication with chamber 25 and/or with an exhaust chamber 29, formed in front of closing partition 18 and having an outlet duct 30 allowing sending back the fluid to a reservoir. More particularly, communication between chambers 25 and 28 occurs through passages 53, 54 formed in plunger 16 perpendicularly to the axis thereof, whereas communication between chambers 28 and 29 takes place through a passage 32, which is opened or closed by means of a gasket 31 acting as a valve.

As said, this portion of brake booster 11 is substantially identical to what has been disclosed and shown in EP 1457400, to which reference is to be made for further details.

The front end of plunger 16 is arranged to engage, when the brake booster is actuated, an abutment ring 40 slidably mounted in a cup-shaped inner end portion 42 of a push rod 41 for the actuation of a piston 61 of master cylinder 12. Push rod 41 is slidably mounted in a tubular appendage 62 of piston 61, in such a manner that, in rest conditions, a certain clearance 52 exists between the front end of push rod 41 and piston 61.

Cup-shaped portion 42 of push rod 41 houses a disc 43 of elastomeric material, which, together with push rod 41, forms the means for transferring the braking force, possibly boosted by brake booster 11, to piston 61 of master cylinder 12, and for transferring the reaction force generated in master cylinder 12 during braking from piston 61 to spool 20, and hence to pedal 22.

Discs of such kind are used for instance in the pneumatic brake boosters disclosed in documents GB 946715 and US 2993478. Yet, as said, use of such discs in hydraulic brake boosters is not known.

Push rod 41 can be made to slide, when pedal 22 is actuated, against the action of a spring 44 arranged between a flanged rim 45 of cup-shaped portion 42 and a partition 46 located in the front portion of internal cavity 13A of body 13 and retained between a step of the internal surface of such a cavity and a blocking ring 51.

Partition 46 and a gasket 69 positioned along body 14 of master cylinder 12 are intended to separate the space where mineral fluid is present (the various chambers of brake booster 11) from the space where non-mineral fluid is present (the chambers of master cylinder 12).

Partition 46 includes, in particular, gaskets 47, 48 designed for working with mineral fluid. Partition 46 is sealingly mounted in cavity 13A and is passed through, always in fluid-tight manner, by tubular appendage 62. The tightness between partition 46 and body 13 and between partition 46 and tubular appendage 62 is provided by gaskets 47, 48, respectively.

Gasket 69 is designed for working with non-mineral fluid and is intended both to avoid deterioration mineral fluid could cause in components designed for working with non-mineral fluid and to act as a scraper ring for master cylinder 12.

Partition 46 is coupled with rear end 63 of body 14 of master cylinder 12, which is closed in order to prevent escape of brake liquid or non-mineral fluid and is shaped so that a separation chamber 49 is formed between partition 46 and end 63. Such a chamber is isolated both from cavity 14A of body 14 of master cylinder 12, and from the remaining part of cavity 13A of body 13, and in particular from exhaust chamber 29. A discharge duct or drain 50 (Fig. 1) is provided in separation chamber 49 and it allows discharging non-mineral fluid possibly leaked from master cylinder 12 through gasket 69 or mineral fluid possibly leaked from the partition of exhaust chamber 29 through gaskets 47 and 48.

Master cylinder 12 is wholly conventional and, in the case shown herein by way of example only, is a tandem master cylinder. Thus, it includes a primary piston (piston 61 actuated by push rod 41) and a secondary piston 64, which pistons define a pair of chambers 65, 66, fed with brake liquid through respective inlets 67 and 68 and connected to respective branches of the braking circuit of the vehicle through outlet ducts, not shown in the drawings. An example of tandem master cylinder utilisable in the present system is disclosed in WO 2006/103049. Of course, in the present system, owing to the provision of brake booster 11, primary piston 61 is actuated by push rod 41 instead of being directly actuated by a rod connected to the brake pedal and similar to rod 21.

The operation of the invention will now be disclosed, assuming that boosting is active, i.e. that brake booster 11 is fed with pressurised fluid.

As disclosed in EP 1457400, in rest conditions chambers 25 and 28 communicate with each other through passages 53, 54 and cavity 19 of plunger 16, and fluid (in the considered example, mineral oil) is present in both of them at the same pressure. When a force F is applied to pedal 22, rod 21, after having overcome the preload of spring 23, makes spool 20 move forward, thereby closing the communication between chambers 25 and 28 and opening the communication between chamber 28 and exhaust chamber 29. Through the valve consisting of gasket 31 and passage 32, fluid is then exhausted into chamber 29 and sent back to the reservoir through outlet 30, thereby reducing the pressure in chamber 28. A pressure difference is thus created on the faces of piston 17 and, since the pressure is lower in chamber 28, also piston 17 moves forward and trails dual-diameter plunger 16 with it. The front end of plunger 16 then engages abutment 40 and makes it slide within end portion 42 of push rod 41, where the abutment will apply a pressure to disc 43 of elastomeric material and make it move forward within cup-shaped portion 42. After having overcome the preload of spring 44, push rod 41 will move forward, nullifying clearance 52 and moving into contact with primary piston 61 of master cylinder 12. The resistance to the forward movement of such a push rod 41, due to the hydraulic pressure generated in the circuits of master cylinder 12, will cause compression of disc 43, the central part of which moves into contact with spool 20. Disc 43, which due to its nature behaves substantially as a fluid, will apply a force to the head diameter of spool 20. This reaction will make spool 20 slide backwards and will make exhaust port formed by the cooperation of spool 20 with gasket 31 close, thereby stabilising the pressure in chamber 28. The equilibrium condition thus attained clearly depends on the ratio between area S43 of disc 43 (which is biased over its whole surface by cup-shaped portion 42 of push rod 41) and area S20 of piston 20. Under these conditions, the force applied by pushrod 41 to piston 61 of the master cylinder will remain unchanged until the force applied to pedal 22 is increased or decreased. In such case, the system will search for a new equilibrium by increasing or decreasing the pressure difference between chambers 25 and 28 in a manner proportional to the ratio of the above mentioned areas.

Of course, in the absence of boosting, boost piston 15 does not intervene and the force applied to pedal 22 is directly transmitted to primary piston 61 through rod 21, spool 20, elastomeric disc 43 and push rod 41.

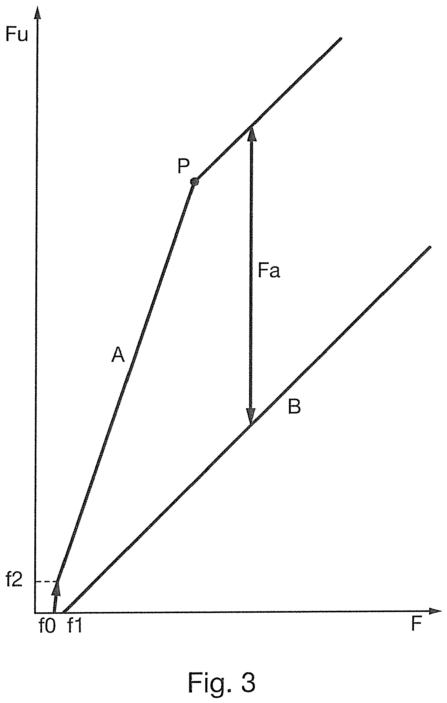

Fig. 3 shows the behaviour of force Fu transmitted by push rod 41 to piston 61 versus force F applied to rod 21 by pedal 22, in the presence of boosting (line A) or in the absence of boosting (line B). A ratio R = 3 between areas S43 and S20 has been considered by way of example.

In the absence of boosting, only spool 20 operates, as said above. The spool starts moving when the resistance of spring 23 has been overcome (abscissa f0) and actuates push rod 41 when the resistance of spring 44 has been overcome (abscissa f1). The increase in force Fu is of course the same as the increase in force F applied to pedal 22.

In the presence of boosting, due to the existence of the clearances between abutment 40 and disc 43 and between disc 43 and the bottom of cup-shaped portion 42, brake booster 11 starts transmitting force Fu to master cylinder 12, with an initial value f2, as soon as the resistance of spring 23 and the pressure difference due to the dual diameter of plunger 16 have been overcome. This initial jump is known in the art as "jump-in". The graph clearly shows that, starting from such an initial value f2, force Fu applied to master cylinder 12 is a multiple of the force applied to pedal 22 according to ratio R between areas S43 and S20. It will also be appreciated that, once a certain value (saturation point P) has been attained, the multiplication of force Fu with respect to force F is stopped and the increase in output force Fu becomes the same as the increase in force F, so that lines A, B become parallel. Distance Fa between the two lines represents the boosting force. The amount of boosting is directly proportional to the pressure of the fluid fed to inlet 27.

It is clear that the invention actually allows attaining the desired aims. The substitution of elastomeric disc 43 for the system of valves serially arranged along the axis of the operating piston significantly simplifies the structure of system 10 and also allows limiting its axial size. Moreover, since no communication between brake booster 11 and master cylinder 12 exists, the invention can be readily applied to systems where the brake booster and the master cylinder operate with incompatible liquids.

It is clear that the above description has been given only by way of non-limiting example and that changes and modifications are possible without departing from the scope of the invention

In particular, the invention can be applied not only in systems where the brake booster and the master cylinder operate with incompatible fluids, but also when brake booster 11 and master cylinder 12 use the same fluid. In such case, partition 46 and chamber 49 with its discharge duct 50 can be dispensed with, and this is a further contribution to the structure simplicity and the axial size limitation. Clearly, in such a situation, spring 44 will rest, at its front end, against end 63 of master cylinder 12 or against a suitable abutment near the mouth of cavity 13A.

Moreover, even if the embodiment described uses a brake booster with a boost piston and an operating piston of the kind disclosed in EP 1457400 and a tandem master cylinder, clearly the invention can be applied to systems having a hydraulic brake booster and a hydraulic master cylinder of different types.

## Claims

1. A hydraulic braking system for a motor vehicle actuated by a braking pedal (22), comprising a master cylinder (12) and a brake booster (11), wherein the brake booster (11) includes:
- a boost piston (15) including a dual diameter plunger (16) housing a hydraulic operating piston (20), said boost piston (15) and said hydraulic operating piston (20) shaping a slidable piston assembly (15, 20) configured for defining, in a body (13) of the brake booster (11), a first and a second chamber (25, 28) arranged to be supplied with pressurised hydraulic fluid;
- means associated with the piston assembly (15, 20) for setting up and cutting off, depending on the operation phases of the brake booster (11), a communication between the first chamber (25) and the second chamber (28) and a communication between the second chamber (28) and an exhaust chamber (29);
- means (41, 43) for transferring to a slidable piston (61) of the master cylinder (12) a braking force, applied to a brake pedal (22) connected to the piston assembly (15, 20) and boosted in the brake booster (11), and for transferring to the piston assembly (15, 20) of the brake booster (11) a reaction force exerted on the piston (61) of the master cylinder (12), consequently to a sliding of the same piston caused by the braking force, by hydraulic fluid present in said master cylinder (12);
wherein said means for transferring a braking force include
- an elastomeric disc (43) arranged between the piston assembly (15, 20) and a pushing member (41) for the piston (61) of the master cylinder (12) and arranged to be deformed either by the piston assembly (15, 20) for transferring the braking force to the piston (61) of the master cylinder or directly by the pushing member (41) for transferring the reaction force to the piston assembly (15, 20), respectively;
**characterised by**
- a gasket (69) positioned along a body (14) of the master cylinder (12), and
- a partition (46) sealingly mounted in the body (13) of the brake booster (11),
said gasket (69) and said partition (46), being placed between the exhaust chamber (29) and a closed end (63) of the body (14) of the master cylinder (12), are arranged to define, with the end (63) of the body (14) of the master cylinder, a separation chamber (49) between a first and a second mutually incompatible hydraulic fluid and mutually isolate spaces in which the first or the second fluid, respectively, are present; the separation chamber (49) being provided with a discharge duct (50) for discharging fluid leaked from either space;
and in that
- said elastomeric disc (43) has first area (S43) and said hydraulic operating piston (20) has a second area (S20), said first area being larger than said second area and the ratio between said first area (S43) and said second area (S20) being arranged both to stabilise the pressure in the second chamber (28) and obtain that the force applied to the master cylinder (12) be a multiple of the force applied to the pedal (22) depending on the ratio between said first area (S43) and said second area (S20).

2. The system as claimed in claim 1, wherein the piston assembly (15, 20) comprises:
- a boost piston (15) arranged to define, in the body (13) of the brake booster (11), the first and the second chamber (25, 28) arranged to be supplied with pressurised hydraulic fluid; and
- an operating piston or spool (20), slidably mounted in the boost piston (15) and arranged to be made to slide by effect of the braking force and to set up and cut off, depending on its position, the communication between the first chamber (25) and the second chamber (28) and between the second chamber (28) and the exhaust chamber (29);
and wherein the elastomeric disc (43) is arranged to be deformed and compressed by the boost piston (15) for transferring the braking force to the piston (61) of the master cylinder and is arranged to apply the reaction force to the spool (20).

3. The system as claimed in claim 2, wherein the elastomeric disc (43) is housed in a cup-shaped end portion (42) of the pushing member (41), between a bottom of said end portion (42) and an abutment ring (40) slidably mounted in said end portion, and the boost piston (15) is arranged to bias the elastomeric disc (43) through the abutment ring (40).

4. The system as claimed in claim 3, wherein the abutment ring (40) and the pushing member (41) are so arranged as to leave, in rest conditions of the brake booster, a gap with respect to the elastomeric disc (43) and the piston (61) of the master cylinder, respectively.

5. The system as claimed in claim 1, wherein the pushing member (41) is arranged to slide in a tubular extension (62) of the piston (61) of the master cylinder (12) passing, in fluid-tight manner, through the partition (46).

6. A method of brake boosting in a motor vehicle having a hydraulic braking system actuated by a braking pedal (22), comprising a master cylinder (12) and a brake booster (11) comprising a boost piston (15) including a dual diameter plunger (16) housing a hydraulic operating piston (20), the method comprising the steps of:
- boosting, in the brake booster (11), a braking force (F) applied to a brake pedal (22);
- transferring a boosted braking force (Fu) from the brake booster (11) to a piston (61) of the master cylinder (12) by means of the deformation of an elastomeric disc (43);
- transferring from the master cylinder (12) to the brake booster (11), by means of the deformation of the elastomeric disc (43), a reaction force generated in the master cylinder (12) in response to the boosted braking force (Fu) applied to the piston (61) of the master cylinder;
- hydraulically isolating an internal space of the master cylinder (12) from an internal space of the brake booster (11);
and being **characterised in that**:
- the master cylinder (12) and the brake booster (11) operate with mutually incompatible hydraulic fluids;
- the isolating step comprises: providing a gasket (69) positioned along the master cylinder (12) and a partition (46) sealingly mounted in the brake booster (11); forming a separation chamber (49) between the internal space of the master cylinder (12) and the internal space of the brake booster (11); and discharging fluid possibly leaked into said separation chamber (49) from the internal space of the master cylinder (12) and/or the internal space of the brake booster (11); and
- the deformation step of the elastomeric disc (43) is arranged to attain both an equilibrium condition of the forces applied and that the force applied to the master cylinder (12) be a multiple of the force applied to the pedal (22), depending on the ratio between area of the disc (43) and area of the piston (20), being the area of the disc larger than the area of the piston.

## Patentansprüche

1. Durch ein Bremspedal (22) betätigtes hydraulisches Bremssystem für ein Kraftfahrzeug, umfassend einen Hauptzylinder (12) und einen Bremskraftverstärker (11), wobei der Bremskraftverstärker (11) Folgendes umfasst:
- einen Verstärkungskolben (15), der einen einen zweifachen Durchmesser aufweisenden Druckkolben (16) umfasst, in dem ein hydraulisch arbeitender Kolben (20) untergebracht ist, wobei der Verstärkungskolben (15) und der hydraulisch arbeitende Kolben (20) eine verschiebbare Kolbenanordnung (15, 20) bilden, die dazu ausgelegt ist, in einem Körper (13) des Bremskraftverstärkers (11) eine erste und eine zweite Kammer (25, 28) festzulegen, die dazu angeordnet sind, mit unter Druck stehender Hydraulikflüssigkeit versorgt zu werden,
- zu der Kolbenanordnung (15, 20) gehörende Mittel, um abhängig von den Betriebsphasen des Bremskraftverstärkers (11) eine Verbindung zwischen der ersten Kammer (25) und der zweiten Kammer (28) sowie eine Verbindung zwischen der zweiten Kammer (28) und einer Abgaskammer (29) herzustellen und zu trennen,
- Mittel (41, 43) zum Übertragen einer Bremskraft, die auf ein Bremspedal (22), das mit der Kolbenanordnung (15, 20) verbunden ist, ausgeübt und in dem Bremskraftverstärker (11) verstärkt wird, zu einem verschiebbaren Kolben (61) des Hauptzylinders (12) und zum Übertragen einer Reaktionskraft, die auf den Kolben (61) des Hauptzylinders (12) und folglich auf ein Verschieben des gleichen Kolbens, das durch die Bremskraft durch in dem Hauptzylinder (12) vorhandene Hydraulikflüssigkeit bewirkt wird, ausgeübt wird, zu der Kolbenanordnung (15, 20) des Bremskraftverstärkers (11),
wobei die Mittel zum Übertragen einer Bremskraft Folgendes umfassen:
- elastomere Scheibe (43), die zwischen der Kolbenanordnung (15, 20) und einem Druckelement (41) für den Kolben (61) des Hauptzylinders (12) angeordnet ist und so angeordnet ist, dass sie entweder durch die Kolbenanordnung (15, 20) zum Übertragen der Bremskraft zu dem Kolben (61) des Hauptzylinders beziehungsweise direkt durch das Druckelement (41) zum Übertragen der Reaktionskraft zu der Kolbenanordnung (15, 20) verformt wird,
**gekennzeichnet durch**
- einen Dichtungsring (69), der entlang einem Körper (14) des Hauptzylinders (12) positioniert ist, und
- eine Trennwand (46), die auf abdichtende Weise in dem Körper (13) des Bremskraftverstärkers (11) befestigt ist,
wobei der Dichtungsring (69) und die Trennwand (46), die zwischen der Abgaskammer (29) und einem geschlossenen Ende (63) des Körpers (14) des Hauptzylinders (12) platziert ist, so angeordnet sind, dass sie mit dem Ende (63) des Körpers (14) des Hauptzylinders eine Trennkammer (49) zwischen einem ersten und einem zweiten Raum festlegen, die gegenseitig inkompatible Hydraulikflüssigkeiten enthalten und gegenseitig getrennt sind und in denen die erste beziehungsweise die zweite Flüssigkeit vorliegt, wobei die Trennkammer (49) mit einem Abführkanal (50) versehen ist, um Flüssigkeit, die aus einem der Räume austritt, abzuführen,
und **dadurch, dass**
- die elastomere Scheibe (43) einen ersten Bereich (S43) aufweist und der hydraulisch arbeitende Kolben (20) einen zweiten Bereich (S20) aufweist, wobei der erste Bereich größer als der zweite Bereich ist und das Verhältnis zwischen dem ersten Bereich (S43) und dem zweiten Bereich (S20), die so angeordnet sind, dass sowohl der Druck in der zweiten Kammer (28) stabilisiert wird als auch erreicht wird, dass die auf den Hauptzylinder (12) ausgeübte Kraft ein Vielfaches der auf das Pedal (22) ausgeübten Kraft ist, abhängig von dem Verhältnis zwischen dem ersten Bereich (S43) und dem zweiten Bereich (S20).

2. System nach Anspruch 1, wobei die Kolbenanordnung (15, 20) Folgendes umfasst:
- einen Verstärkungskolben (15), der angeordnet ist, um in dem Körper (13) des Bremskraftverstärkers (11) die erste und die zweite Kammer (25, 28) festzulegen, die angeordnet sind, um mit unter Druck stehender Hydraulikflüssigkeit versorgt zu werden, und
- einen Arbeitskolben (20), der verschiebbar in dem Verstärkungskolben (15) befestigt und dazu angeordnet ist, durch die Wirkung der Bremskraft veranlasst zu werden, sich zu verschieben, und abhängig von seiner Position die Verbindung zwischen der ersten Kammer (25) und der zweiten Kammer (28) sowie zwischen der zweiten Kammer (28) und der Abgaskammer (29) herzustellen und zu trennen,
und wobei die elastomere Scheibe (43) so angeordnet ist, dass sie zum Übertragen der Bremskraft zu dem Kolben (61) des Hauptzylinders von dem Verstärkungskolben (15) verformt und zusammengedrückt wird, und so angeordnet ist, dass sie die Reaktionskraft auf den Kolben (20) ausübt.

3. System nach Anspruch 2, wobei die elastomere Scheibe (43) in einem becherförmigen Endabschnitt (42) des Druckelements (41) zwischen einem Boden des Endabschnitts (42) und einem verschiebbar in dem Endabschnitt befestigten Anschlagring (40) untergebracht ist und der Verstärkungskolben (15) so angeordnet ist, dass er die elastomere Scheibe (43) durch den Anschlagring (40) vorspannt.

4. System nach Anspruch 3, wobei der Anschlagring (40) und das Druckelement (41) so angeordnet sind, dass sie in Ruhezuständen des Bremskraftverstärkers in Bezug auf die elastomere Scheibe (43) beziehungsweise den Kolben (61) des Hauptzylinders einen Spalt lassen.

5. System nach Anspruch 1, wobei das Druckelement (41) so angeordnet ist, dass es in einer röhrenförmigen Verlängerung (62) des Kolbens (61) des Hauptzylinders (12) verschoben wird und auf flüssigkeitsdichte Weise durch die Trennwand (46) führt.

6. Verfahren zur Bremskraftverstärkung in einem Kraftfahrzeug, das ein durch ein Bremspedal (22) betätigtes hydraulisches Bremssystem, umfassend einen Hauptzylinder (12), und einen Bremskraftverstärker (11) aufweist, der einen Verstärkungskolben (15) umfasst, der einen einen zweifachen Durchmesser aufweisenden Druckkolben (16) umfasst, in dem ein hydraulisch arbeitender Kolben (20) untergebracht ist, wobei das Verfahren folgende Schritte aufweist:
- Verstärken einer auf ein Bremspedal (22) ausgeübten Bremskraft (F) in dem Bremskraftverstärker (11),
- Übertragen einer verstärkten Bremskraft (Fu) von dem Bremskraftverstärker (11) zu einem Kolben (61) des Hauptzylinders (12) mittels der Verformung einer elastomeren Scheibe (43),
- Übertragen einer Reaktionskraft, die in Reaktion auf die auf den Kolben (61) des Hauptzylinders ausgeübte verstärkte Bremskraft (Fu) in dem Hauptzylinder (12) erzeugt wird, von dem Hauptzylinder (12) zu dem Bremskraftverstärker (11) mittels der Verformung der elastomeren Scheibe (43),
- hydraulisches Trennen eines Innenraums des Hauptzylinders (12) von einem Innenraum des Bremskraftverstärkers (11),
und **dadurch gekennzeichnet, dass**:
- der Hauptzylinder (12) und der Bremskraftverstärker (11) mit gegenseitig inkompatiblen Hydraulikflüssigkeiten arbeiten,
- der Schritt des Trennens Folgendes umfasst: Vorsehen eines Dichtungsrings (69), der entlang dem Hauptzylinder (12) positioniert ist, und einer Trennwand (46), die auf abdichtende Weise in dem Bremskraftverstärker (11) befestigt ist, Ausbilden einer Trennkammer (49) zwischen dem Innenraum des Hauptzylinders (12) und dem Innenraum des Bremskraftverstärkers (11) und Abführen von Flüssigkeit, die möglicherweise aus dem Innenraum des Hauptzylinders (12) und/oder dem Innenraum des Bremskraftverstärkers (11) ausgetreten und in die Trennkammer (49) eingetreten ist, und
- der Schritt des Verformens der elastomeren Scheibe (43) so angeordnet ist, dass sowohl ein Gleichgewichtszustand der ausgeübten Kräfte erreicht wird als auch erreicht wird, dass die auf den Hauptzylinder (12) ausgeübte Kraft ein Vielfaches der auf das Pedal (22) ausgeübten Kraft ist, abhängig von dem Verhältnis zwischen dem Bereich der Scheibe (43) und dem Bereich des Kolbens (20), wobei der Bereich der Scheibe größer als der Bereich des Kolbens ist.

## Revendications

1. Système de freinage hydraulique pour un véhicule automobile actionné par une pédale de freinage (22), comprenant un maître-cylindre (12) et un servofrein (11), dans lequel le servofrein (11) comprend :
- un piston de suralimentation (15) comprenant un plongeur à double diamètre (16) logeant un piston de fonctionnement hydraulique (20), ledit piston de suralimentation (15) et ledit piston de fonctionnement hydraulique (20) formant un ensemble de piston (15, 20) coulissant configuré pour définir, dans un corps (13) du servofrein (11), une première et une seconde chambre (25, 28) agencées pour être alimentées en fluide hydraulique sous pression ;
- des moyens associés à l'ensemble de piston (15, 20) pour mettre en place et couper, en fonction des phases de fonctionnement du servofrein (11), une communication entre la première chambre (25) et la seconde chambre (28) et une communication entre la seconde chambre (28) et une chambre d'échappement (29) ;
- des moyens (41, 43) pour transférer à un piston coulissant (61) du maître-cylindre (12) une force de freinage, appliquée à une pédale de frein (22) reliée à l'ensemble de piston (15, 20) et renforcée dans le servofrein (11), et pour transférer à l'ensemble de piston (15, 20) du servofrein (11) une force de réaction exercée sur le piston (61) du maître-cylindre (12), en conséquence d'un glissement du même piston provoqué par la force de freinage, par le fluide hydraulique présent dans ledit maître-cylindre (12) ;
lesdits moyens de transfert d'une force de freinage comprenant
- un disque élastomère (43) agencé entre l'ensemble de piston (15, 20) et un élément de poussée (41) pour le piston (61) du maître-cylindre (12) et agencé pour être déformé soit par l'ensemble de piston (15, 20) pour transférer la force de freinage au piston (61) du maître-cylindre, soit directement par l'élément de poussée (41) pour transférer la force de réaction à l'ensemble de piston (15, 20), respectivement ;
**caractérisé par**
- un joint (69) positionné le long d'un corps (14) du maître-cylindre (12), et
- une cloison (46) montée de manière étanche dans le corps (13) du servofrein (11),
ledit joint (69) et ladite cloison (46), étant placés entre la chambre d'échappement (29) et une extrémité fermée (63) du corps (14) du maître-cylindre (12), sont agencés pour définir, avec l'extrémité (63) du corps (14) du maître-cylindre, une chambre de séparation (49) entre un premier et un second fluide hydraulique mutuellement incompatible et isoler mutuellement des espaces dans lesquels le premier ou le second fluide, respectivement, sont présents ; la chambre de séparation (49) étant munie d'un conduit de décharge (50) pour évacuer le fluide s'échappant de l'un des espaces ;
et en ce que
- ledit disque élastomère (43) a une première zone (S43) et ledit piston hydraulique (20) a une seconde zone (S20), ladite première zone étant plus grande que ladite seconde zone et le rapport entre ladite première zone (S43) et ladite seconde zone (S20) étant agencé à la fois pour stabiliser la pression dans la seconde chambre (28) et obtenir que la force appliquée au maître-cylindre (12) soit un multiple de la force appliquée à la pédale (22) en fonction du rapport entre ladite première zone (S43) et ladite seconde zone (S20).

2. Système selon la revendication 1, dans lequel l'ensemble de piston (15, 20) comprend :
- un piston de suralimentation (15) agencé pour définir, dans le corps (13) du servofrein (11), les première et seconde chambres (25, 28) agencées pour être alimentées en fluide hydraulique sous pression ; et
- un piston ou une bobine de fonctionnement (20), monté coulissant dans le piston de suralimentation (15) et agencé pour coulisser sous l'effet de la force de freinage et pour établir et couper, en fonction de sa position, la communication entre la première chambre (25) et la seconde chambre (28) et entre la seconde chambre (28) et la chambre d'échappement (29) ;
et dans lequel le disque élastomère (43) est agencé pour être déformé et comprimé par le piston de suralimentation (15) pour transférer la force de freinage au piston (61) du maître-cylindre et est agencé pour appliquer la force de réaction à la bobine (20).

3. Système selon la revendication 2, dans lequel le disque élastomère (43) est logé dans une partie d'extrémité en forme de godet (42) de l'élément de poussée (41), entre un fond de ladite partie d'extrémité (42) et un anneau de butée (40) monté coulissant dans ladite partie d'extrémité, et le piston de poussée (15) est agencé pour solliciter le disque élastomère (43) à travers l'anneau de butée (40).

4. Système selon la revendication 3, dans lequel l'anneau de butée (40) et l'élément de poussée (41) sont disposés de manière à laisser, dans les conditions de repos du servofrein, un espace par rapport au disque élastomère (43) et au piston (61) du maître-cylindre, respectivement.

5. Système selon la revendication 1, dans lequel l'élément de poussée (41) est agencé pour glisser dans une extension tubulaire (62) du piston (61) du maître-cylindre (12) passant, de manière étanche aux fluides, à travers la cloison (46).

6. Procédé de suralimentation de freinage dans un véhicule automobile ayant un système de freinage hydraulique actionné par une pédale de freinage (22), comprenant un maître-cylindre (12) et un servofrein (11) comprenant un piston de suralimentation (15) incluant un plongeur (16) à double diamètre logeant un piston de fonctionnement hydraulique (20), le procédé comprenant les étapes consistant à :
- renforcer, dans le servofrein (11), une force de freinage (F) appliquée à une pédale de frein (22) ;
- transférer une force de freinage renforcée (Fu) du servofrein (11) à un piston (61) du maître-cylindre (12) au moyen de la déformation d'un disque élastomère (43) ;
- transférer du maître-cylindre (12) au servofrein (11), au moyen de la déformation du disque élastomère (43), une force de réaction générée dans le maître-cylindre (12) en réponse à la force de freinage renforcée (Fu) appliquée au piston (61) du maître-cylindre ;
- isoler hydrauliquement un espace interne du maître-cylindre (12) d'un espace interne du servofrein (11) ;
et étant **caractérisé en ce que** :
- le maître-cylindre (12) et le servofrein (11) fonctionnent avec des fluides hydrauliques incompatibles entre eux ;
- l'étape d'isolation comprend : la fourniture d'un joint (69) positionné le long du maître-cylindre (12) et une cloison (46) montée de manière étanche dans le servofrein (11) ; la formation d'une chambre de séparation (49) entre l'espace interne du maître-cylindre (12) et l'espace interne du servofrein (11) ; et l'évacuation du fluide éventuellement infiltré dans ladite chambre de séparation (49) à partir de l'espace interne du maître-cylindre (12) et/ou de l'espace interne du servofrein (11) ; et
- l'étape de déformation du disque élastomère (43) est configurée pour atteindre à la fois une condition d'équilibre des forces appliquées et que la force appliquée au maître-cylindre (12) soit un multiple de la force appliquée à la pédale (22), en fonction du rapport entre la surface du disque (43) et la surface du piston (20), la surface du disque étant plus grande que la surface du piston.
